# EUROPÄISCHE PATENTSCHRIFT

(11) **EP 2 944 550 B1**
(45) Veröffentlichungstag und Bekanntmachung des Hinweises auf die Patenterteilung: **03.05.2017**
(21) Anmeldenummer: 15157638.6
(22) Anmeldetag: 04.03.2015
(51) Int. Cl.: B62D 21/02, B62D 63/02, B62D 21/11

(54) **Fahrgestell für Nutzfahrzeuge**
Chassis for commercial vehicles
Châssis pour véhicules utilitaires

(30) Priorität: 14.05.2014 DE 102014209130
(43) Veröffentlichungstag der Anmeldung: 18.11.2015
(73) Patentinhaber: Engineering Center Steyr GmbH & Co KG, 4300 St. Valentin (AT)
(72) Erfinder: Hirsch, Alois, 3351 Weistrach (AT); Schwarz, Gregor, 4407 Dietach (AT); Sinn, Martin, 4407 Dietach (AT)
(74) Vertreter: Zangger, Bernd

(56) Entgegenhaltungen:
- EP-A2- 1 318 064
- DE-A1-102010 010 366
- DE-A1-102012 013 901
- US-A1- 2004 056 468

## Beschreibung

Die vorliegende Erfindung betrifft ein Fahrgestell für Nutzfahrzeuge, mit einer einem Vorderachsbereich des Nutzfahrzeugs zugeordneten vorderen Baugruppe, einer einem Hinterachsbereich des Nutzfahrzeugs zugeordneten hinteren Baugruppe, und einer mittleren Baugruppe, welche die vordere Baugruppe und die hintere Baugruppe miteinander verbindet.

### Stand der Technik

Fahrgestelle von Nutzfahrzeugen werden üblicherweise auf Basis eines durchgehenden Leiterrahmens gefertigt. Ein derartiger Leiterrahmen besteht aus zwei Längsträgern, die beispielsweise als C-Profilelemente ausgebildet sind und die durch mehrere Querträger miteinander verbunden sind. Meist sind die Längsträger mit den Querträgern verschraubt oder vernietet. An dem Rahmen werden verschiedene Fahrzeugkomponenten angebracht, wie z. B. Vorder- und Hinterachse, Antriebsaggregate, Fahrerhaus, Transportaufbau oder Sattelkupplung, Kraftstofftanks, Batteriekasten sowie das Abgassystem. Hinsichtlich einer flexiblen Verwendbarkeit eines Fahrgestelltyps für unterschiedliche Fahrzeugvarianten oder Antriebssysteme ist es wünschenswert, eine Modulbauweise vorzusehen.

Fahrgestelle der Leiterrahmen-Bauweise sind ausreichend stabil, weisen jedoch ein relativ hohes Eigengewicht auf. Dieses Problem des hohen Eigengewichts wird dadurch verschärft, dass aufgrund strenger werdender gesetzlicher Emissionsvorschriften zusätzliche Abgasbehandlungskomponenten, wie beispielsweise Katalysatoren oder Harnstofftanks, am Fahrzeug vorzusehen sind. Weitere gewichtssteigernde Faktoren sind der zunehmende Elektronikanteil hinsichtlich der Sensorik und Aktuatorik, höhere Komfortansprüche sowie der Einsatz von alternativen Kraftstoffen oder Antriebskonzepten, wobei als Beispiel für die letzteren insbesondere Hybridantriebe anzuführen sind. Ein hohes Eigengewicht ist mit einer geringeren Nutzlast, einem erhöhten Kraftstoffverbrauch und demzufolge mit unerwünschten Mehrkosten und einer größeren Schadstoffbelastung verbunden.
Aus der DE 102009012350A1 ist ein modular aufgebautes Fahrgestell für Nutzfahrzeuge bekannt, das unter Beibehaltung der üblichen Steifigkeits- und Festigkeitseigenschaften eine Gewichtsreduktion gegenüber herkömmlichen Fahrgestellen erzielt, wobei die mittlere Baugruppe als kastenförmiges Hohlprofil aus Blechumformteilen ausgebildet ist, und die Längsträger der vorderen und hinteren Baugruppe aus zumindest bereichsweise geschlossenen Profilteilen ausgebildet sind und wenigstens eine der vorderen und hinteren Baugruppe lösbar an der mittleren Baugruppe angebracht ist.
Der innere Hohlraum der Kastenstruktur der mittleren Baugruppe kann z.B. zur geschützten Unterbringung von Teilen des Antriebssystems, der Versorgungstanks und/oder des Abgassystems des Nutzfahrzeugs verwendet werden. Dadurch, dass eine der Verbindungsstellen zwischen den einzelnen Baugruppen lösbar ist, können bei der Montage des Nutzfahrzeugs die unterzubringenden Fahrzeugteile leicht eingeschoben werden. Für die Verbindung eines klassischen Nutzfahrzeugrahmens mit einer Einzelradaufhängung und zur Anbindung von Anbauteilen und Unterfahrschutz an denselben sind i.a. mehrere, schwere und komplexe Konsolen erforderlich. Um Schwingungs- und Steifigkeitsprobleme bei dieser Bauweise zu vermeiden, muss der Rahmen selbst wiederum sehr steif und damit schwer ausgeführt werden. Damit werden einzelradaufgehängte Chassis derzeit trotz der Vorteile der Einzelradaufhängung kaum eingesetzt.
Aus der EP1902873 A1 ist ein Fahrschemel für eine Einzelradaufhängung für ein Nutzfahrzeug bekannt, der Haltelemente für die Anbindung der Federeinrichtung und der Querlenker aufweist, sowie an die Rahmenlängsträger des Fahrzeuges angeschlossen werden kann. Die Haltelemente sind dabei als Pressteile oder als Schweißgruppierung ausgeführt, und durch die Anbindung an die konventionellen Fahrzeuglängsträger wird das Gesamtgewicht durch die Konstruktion eher erhöht.
Aus der DE102012013901 A1 ist eine Rahmenstruktur bekannt, die Tragkonstruktion aufweist, die zur Aufnahme eines Tanks und zur Verbindung mit Lenkerelementen einer Radaufhängung dienen. Aus der US2004056468A1 ist ein steckbarere Rahmen für ein Kraftfahrzeug bekannt.
Aus der DE102010010366A1 ist ein modularer Aufbau für die Tragstriktur eines Kraftfahrzeugs bekannt, wobei die Tragstruktur in Leichtbauweise aus Blechumformteilen hergestellt ist.
Aus der gattungsgemäßen EP1318064 A2 ist eine modulare Tragstruktur bekannt, die auch für einen Anbringung von Einzelradaufhängungen vorgesehen ist. Für die Einzelradaufhängung werden Konsolen und ein spezielles Querjoch verwendet. Dadurch werden zusätzliche Bauteile für die Einzelradaufhängung verwendet, die wiederum Zusatzgewicht bringen.
Es ist daher Aufgabe der Erfindung im Rahmen einer modularen Bauweise eine Modul für Einzelradaufhängungen zu schaffen, das kein oder kaum zusätzliches Gewicht einführt und einfach an bestehenden Leichtbaustrukturen anschließbar ist.

Genauer ist die Aufgabe gelöst mit einem Fahrgestell für Nutzfahrzeuge, insbesondere für Sattelzugmaschinen, das umfasst: eine einem Vorderachsbereich des Nutzfahrzeugs zugeordnete vordere Baugruppe, eine einem Hinterachsbereich des Nutzfahrzeugs zugeordnete hintere Baugruppe, und eine mittlere Baugruppe, welche die vordere Baugruppe und die hintere Baugruppe miteinander verbindet, wobei die hintere und/oder die vordere Baugruppe mindestens ein Hinterachs- bzw. Vorderachsmodul für Einzelradaufhängung aufweisen. Vorteilhafterweise ist der erfindungsgemäße Aufbau leicht und vermeidet schwere Konsolen für die Einzelradaufhängung. Dazu besteht die vordere und/oder die hintere Baugruppe aus mindestens einem Obergurt und mindestens einem Untergurt, die schubsteif mit Verbindern verbunden sind. Dadurch wird ein Bauraum geschaffen, der zur Aufnahme von Bauteilen des Fahrzeugs dient und für deren Anbindung eingerichtet ist. Dabei erfolgt die Anbringung der Einzelradaufhängung mit oberen und unteren Querlenker an den Verbindern.

Es ist von Vorteil, dass entweder die vordere oder die hintere Baugruppe lösbar oder unlösbar mit der mittleren Baugruppe verbunden ist, insbesondere mit dieser verschweißt ist, wodurch ein hohes Maß an Flexibilität entsteht.

Es ist dabei von Vorteil, dass die Verbinder beide Untergurte und die Obergurte auf jeder Seite des Fahrzeugs verbinden. Die Bauweise vereinfacht den Gesamtaufbau.

Alternativ ist es auch von Vorteil, wenn Obergurt und Untergurt aus einem Bauteil bestehen.

In einer vorteilhaften Ausgestaltung weist der Obergurt und /oder der Untergurt zur Fahrzeuglängsachse einen Winkel auf.

Es ist von Vorteil, dass vordere und/oder die hintere Baugruppe an die Bauhöhe der mittleren Baugruppe angepasst sind, um eine optimale Einleitung der Kräfte in die Strukturen des Leichtbauurahmens zu gewährleisten.

Die modulare Bauweise ist von Vorteil, wenn die vordere Baugruppe für die Aufnahme mindestens einer Vorderachse dient oder die hintere Baugruppe für die Aufnahme mindestens einer Vor- und/oder Hinter- und/oder Nachlaufachse dient.

Vorteilhafterweise ist ein Unterfahrschutz oder ein Längslenker für die Antriebsachse am Untergurt angebracht.
Vorteilhafterweise werden die Verbinder zwischen Ober-und Untergurt auf einer Seite des Rahmens und zwischen den Ober- und/oder Untergurten zwischen beiden Seiten des Rahmens als zusammenhängendes Bauteil oder Baugruppe ausgeführt
Weiterhin ist es ein Vorteil, dass die Feder unterhalb des Schubmittelpunktes der Tragstruktur, insbesondere unterhalb des Obergurtes angebracht ist.

Es hat sich gezeigt, dass durch die erfindungsgemäße modulartige Mischbauweise aus miteinander verbundenen geschlossenen Profilelementen und Blechumformteilen eine bedeutende Gewichtsreduktion unter Beibehaltung der geforderten Festigkeitswerte, insbesondere der Torsionssteifigkeit, erzielbar ist. Berechnungen haben ergeben, dass bei einer handelsüblichen Sattelzugmaschine eine drastische Gewichtsreduktion im Vergleich zur Leiterrahmen-Bauweise erreichbar ist. Dadurch wird wiederum eine Erhöhung der Nutzlast ermöglicht. Überdies wird der Montageaufwand aufgrund der relativ geringen Anzahl an Schraubverbindungen verringert.

### Beschreibung der Erfindung

Die Erfindung wird nachfolgend beispielhaft unter Bezugnahme auf die beigefügte Zeichnung beschrieben.
- Fig. 1: zeigt eine schematische Darstellung der beispielhaften Ausführungsform am Beispiel der Vorderachse.
- Fig. 2: zeigt eine Ausführungsform der Einzelradaufhängung an der Vorderachse
- Fig. 3: zeigt eine Ausführungsform mit montierten Komponenten der Einzelradaufhängung
- Fig. 4: zeigt einen Aufbau in Leichtbautechnik im Stand der Technik

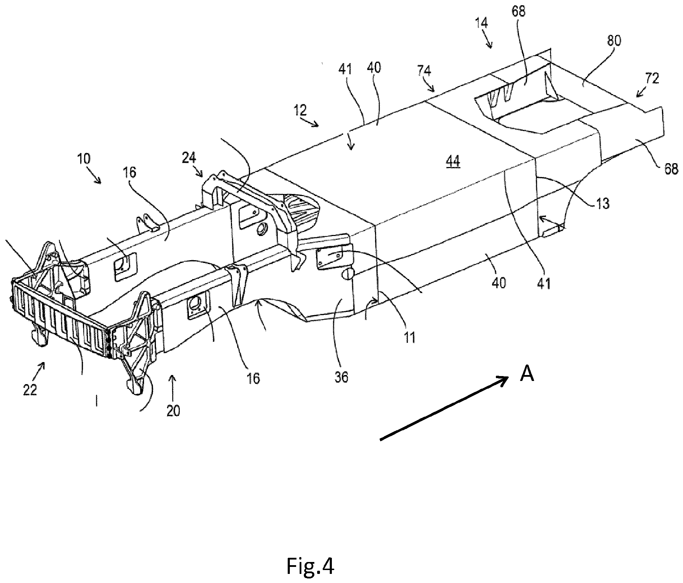

In Figur 4 ist beispielhaft ein Fahrgestell für eine 4 * 2-Sattelzugmaschine dargestellt. Entlang der Fahrzeuglängsachse A ist das Fahrgestell in eine vordere Baugruppe 10, eine mittlere Baugruppe 12 und eine hintere Baugruppe 14 aufgeteilt. Die vordere Baugruppe 10 ist dem Vorderachsbereich der Sattelzugmaschine zugeordnet, wohingegen die hintere Baugruppe 14 dem Hinterachsbereich der Sattelzugmaschine zugeordnet ist. Die vordere Baugruppe 10 umfasst zwei quer zur Fahrzeuglängsachse A voneinander beanstandeter Längsträger 16, die aus bereichsweise geschlossenen Profilteilen, insbesondere Blechprofilteilen, ausgebildet sind. Am vorderen Endabschnitt 20 der vorderen Baugruppe 10 sind die Längsträger 16 durch ein Querträgerelement 22 verbunden. Jeder der beiden Längsträger 16 weist zudem an dem hinteren Endabschnitt 24 eine trichterförmige Erweiterung 36 als Verbindungselement zu der mittleren Baugruppe 12 auf.
Die mittlere Baugruppe 12 ist aus Blechumformteilen aus einem gewalzten und gebogenen Verbundblech hergestellt. Weiterhin werden die verbundenen Bleche jeweils in den geraden Bereichen entlang zweier Biegekanten 41 umgebogen, sodass letztendlich eine U-förmige Halbschale 40 entsteht. Die Biegekanten 41 verlaufen in Fahrzeuglängsrichtung A und quer zur Walzrichtung der Bleche. Zwei derartige Halbschalen 40 werden stumpf verschweißt, um ein quaderartiges Hohlprofil 44 zu bilden. An den inneren Seitenflächen des Hohlprofils 44 sind im Bereich der Biegekanten 41 im Grundblech mitgeformte Einschubabschnitte für die Kraftstofftanks, Harnstofftanks beziehungsweise für Energiespeicher verschiedenster Bauweisen vorgesehen.

Die hintere Baueinheit 14 besteht aus zwei kurzen Längsträgern 68 aus im Wesentlichen geschlossenen Profilelementen, welche im hinteren Endabschnitt 72 durch einen Blechquerträger 80 und im vorderen Endabschnitt 74 durch einen weiteren Blechquerträger (in den Figuren nicht sichtbar) fest miteinander verbunden sind.
Bei der dargestellten Ausführungsform ist die vordere Baugruppe 10 an einer vorderen Verbindungsstelle 11 mit der mittleren Baugruppe 12 verschweißt, während die hintere Baugruppe 14 an einer hinteren Verbindungsstelle 13 mit der mittleren Baugruppe 12 verschraubt ist. Die Verbindungsstelle 13 zwischen der mittleren Baugruppe 12 und der hinteren Baugruppe 14 ist also lösbar.
In Verbesserung dieses Standes der Technik werden die hintere Baugruppe 14 und/oder die vordere Baugruppe 10 durch Module zur Einzelradaufhängung ersetzt.

Mindestens eine dieser Baugruppe ersetzt die im Stand der Technik gezeigten Baugruppen durch erfindungsgemäße Vorderachs- und/oder Hinterachsmodule.

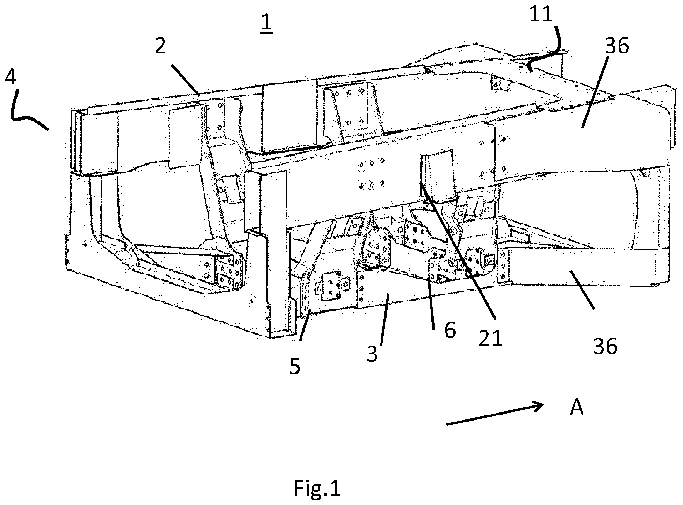

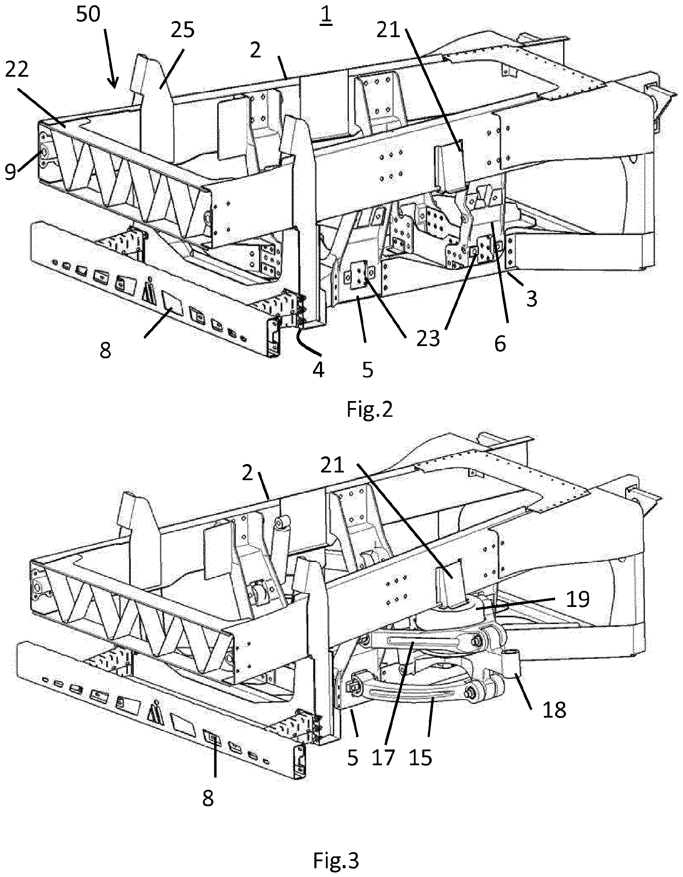

Figur 1 zeigt ein Vorderachsmodul, das als vordere Baugruppe 10 dient. Figur 1 zeigt das Vorderachsmodul ohne angebaute Einzelradaufhängung und die Anbauten der Figuren 3 und 4. Dieses Modul dient als beispielhafte Ausführungsform, da sich das Modul für die Vorderachsaufhängung auch als Hinterachsmodul für Vor- und / oder Nachlaufachsen darstellen lässt.
Das Vorderachsmodul 1 besteht aus jeweils einem auf beiden Fahrzeuglängsseiten entlang geführten Obergurt 2 sowie einem jeweils entlanggeführten Untergurt 3. Ober- und Untergurt 2,3 sind über Verbinder 5 und 6 miteinander schubsteif verbunden. Der Obergurt 2 und der Untergurt 3 sind gerade oder weisen zur Aufnahme großer Kühler nach vorne, gegen die Fahrzeuglängsachse, einen Winkel nach außen auf. An der Verbindungsstelle 11 zur mittleren Baugruppe ist eine trichterförmige Erweiterung 36 an Ober- und Untergurt 2,3 angebracht.
Zur Montage weitere Bauteile weisen Ober-und Untergurt 2,3 Anschläge 21 und Befestigungsmittel auf.
Die Verbinder 5 und 6 sind wannenförmig ausgebildet und weisen zusätzlich zu den Verbindungsstellen mit Ober- und Untergurt 2,3, noch Anbindungen für Bauteile auf. So dienen die Verbinder 5,6 zur Aufnahme von Querlenker, Stoßdämpfer, des Lenksystems und der vorderen Motorlagerung.

Die notwendigen Verbinder 5,6 zur Aufnahme der Einzelradaufhängung werden aus Strukturelementen gebildet und müssen so geformt sein, dass der für die Aufnahme des Antriebsstranges notwendige Bauraum innerhalb des Moduls vorhanden ist. Darüber hinaus nehmen die Verbinder 5,6 die Lenkungsbauteile auf. Die Verbinder werden so ausgeformt, dass sie in Querrichtung die beiden Untergurte verbinden und auf jeder Seite so weitergeführt werden, dass Unter- und Obergurte 3,2 miteinander verbunden werden.
Die Verbinder 5,6 dienen gleichzeitig der Aufnahme von Motorlager und Stoßdämpfer.

Die Bauteile der Ober- und Untergurt können auch aus einem einzigen Bauteil z.B. aus einem Blechbauteil bestehen.
Ober- und Untergurt bzw. das Einzelradaufhängungsmodul werden näherungsweise mit der Höhe der mittleren Baugruppe des Leichtbaurahmens weitergeführt, um die Bauhöhe des Leichtbaurahmens optimal zu nutzen. Allerdings ist es für die Erfindung nicht relevant, dass das Einzelradaufhängungsmodul als vordere oder hintere Baugruppe 10,14 dieselbe Bauhöhe wir die mittlere Baugruppe 12 aufweist. Hier besteht die Freiheit, die Baugruppen optimal anzupassen, wobei der direkte Kraftfluss durch den gesamten Rahmen im Vordergrund steht.

Die Verbindungsstelle 11 zur mittleren Baugruppe 12 ist in einer bevorzugten Ausführungsform gleich hoch und breit, muss aber in der Breite nach vorne eingezogen werden um den notwendigen Bauraum für die Aufnahme der Einzelradaufhängung, Federung und den Raum für den Radeinschlages zur Verfügung zu stellen.
Die Kontur des Moduls ist so gewählt, dass es die Anbindepunkte und den Bauraum aller Bauteile im Bereich des Moduls z.B. Achsaufhängung, Kühlermodul, Fahrerhauslagerung Unterfahrschutz, Motor-Getriebe-Verbund, Stoßstange, Aufstieg, Abschleppöse, Kupplungsmaul integriert bzw. berücksichtigt, so dass keine zusätzlichen Konsolen benötigt werden, und wobei ein optimaler Kraftfluss unter Berücksichtigung der zukünftigen Anforderungen gegeben ist. Dies kann beispielsweise bedeuten, dass Ober- und Untergurt 2,3 nicht gerade und parallel zur Längsachse verlaufen, sondern auch einen Winkel zur Fahrzuglängsachse A aufweisen können.

Das Einzelradaufhängungsmodul weist einen homogenen Übergang vom Mittelmodul zum Einzelradaufhängungsmodul auf um einen gleichmäßigen Kraftfluss zu ermöglichen.
Das Modul setzt sich aus Schalenelementen und Guss-Strukturelementen zusammen. Dies führt zu einer Gewichtsreduktion und zum anderen zu einer erhöhten Biege- und Torsionssteifigkeit, sowie zur Reduzierung des Fahrzeuggewichtes und somit zur Erhöhung der Nutzlast.

In Figur 2 ist an das Vorderachsmodul 1 ein Querträgerelement 22 zwischen den beidseitigen Obergurten 2 angebaut und an den beidseitig verlaufenden Untergurten ein Unterfahrschutz 8 befestigt. Dadurch wird an der vorderen Schnittstelle 4 entlang Bauraum 50 für ein Kühlermodul gebildet, das durch Fahrerhausanbindeelemente 25 vervollständigt wird. Das Beispiel zeigt dabei ein Vorderachsmodul, das aus nur einer Vorderachse mit Einzelradaufhängung besteht. Die Struktur des Untergurtes 3 ist so ausgeführt, dass der gesetzlich vorgeschriebene Unterfahrschutz 8 auf einfache Art befestigt bzw. integriert werden kann. Dadurch verbessert sich der direkter Kraftfluss vom Unterfahrschutz 8 durch den gesamten Rahmen, beginnend bei den Untergurten 3 unter Vermeidung einer schweren Konsole zur Kraftflussumleitung.
Die durch die Komponenten Querträgerelement 22, Fahrerhausanbindeelemente 25 und Unterfahrschutz 8 gebildete Struktur um den Bauraum 50 herum dient zur Aufnahme einer Abschleppvorrichtung mit Abschleppösen 9, die im Querträgerelement 22 angebracht sind, der vorderen Fahrerhauslagerung, der Stoßstangenbefestigung und der Aufstiegsstufenbefestigung. An den Querverbindern 5,6 sind Anbindungen 23 für die Einzelradaufhängung vorgesehen.

Für Fahrzeuge mit mehreren Vorderachsen mit Einzelradaufhängung können weitere Einzelradaufhängungsmodule gekoppelt werden. Am vorderen Ende des zusätzlichen Einzelradaufhängungsmodules wird dann wieder das Kühlermodul mit dem Unterfahrschutz angebaut.

In Figur 3 werden die Komponenten für eine Einzelradaufhängung dargestellt. Ein unterer Querlenker 15 und ein oberer Querlenker 17 sind an den Verbindern 5 und 6 angeschraubt. Die beiden Querlenker 15, 17 dienen zur Führung des Achsschenkelträgers 18.
Die am Achsschenkelträgers 18 auftretenden Radaufstandskräfte werden von einer Feder 19, vorzugsweise einer Luftfeder, an der Unterseite des Obergurts 2 über den Anschlag 21 abgestützt. Die Feder ist so angebracht, dass sie die Kraft vorzugsweise in den Schubmittelpunkt des Obergurtes 2 bzw. der Tragstruktur einleitet. Dadurch wird eine Verdrehung des Rahmens unterbunden.

Die Befestigung des Rades an der Einzelradaufhängung sowie die Anbindung an Antrieb und Lenkung erfolgt wie im Stand der Technik bekannt.

Vorzugsweise ist entweder die vordere oder die hintere Baugruppe unlösbar mit der mittleren Baugruppe verbunden, insbesondere mit dieser verschweißt. Die Schweißverbindung kann dabei "Stoß auf Stoß" oder überlappend ausgeführt sein. Die Unlösbarkeit einer der beiden Verbindungsstellen zwischen den Baugruppen erhöht die Stabilität und verringert den Montageaufwand.

Die Obergurte und Untergurte der vorderen Baugruppe oder die Obergurte und Untergurte der hinteren Baugruppe können eine jeweilige trichterförmige Erweiterung für eine Verbindung mit der mittleren Baugruppe umfassen. Auf diese Weise kann eine besonders stabile Schweßsverbindung zur Bildung der unlösbaren Verbindungsstelle geschaffen werden. In den trichterförmigen Erweiterungen kann ferner je eine Aufnahme für die Lagerung der Antriebsaggregate eingearbeitet sein.

Durch die modulare Bauweise ist es möglich, das als Vorderachsmodul beispielhaft beschriebene Modul auch als Hinterachsmodul mit Einzelradaufhängung einzusetzen. Dabei wird das Modul an der Schnittstelle 11 mit der Verbindungsstelle 13 an der Rückseite der mittleren Baugruppe 12 verbunden. Es besteht die Möglichkeit durch Kombination der Module verschiedene Achskonfigurationen zu erreichen.
Das Frontmodul kann für eine und / oder mehrere Vorderachsen verwendet werden.

Mit der erfindungsgemäßen modularen Lösung lassen sich Kombination realisieren wie:
- Vorlaufachse mit Einzelradaufhängung kombiniert mit einem Hinterachsmodul ,
- Hinterachsmodul mit Nachlaufachse mit Einzelradaufhängung
- Hinterachsaggregat, das aus mehrere gekoppelte Module mit Einzelradaufhängung besteht.
Somit lassen sich auch alle aus den Einzelkombination möglichen weiter en Kombinationen aufbauen und mit dem modularen Konzept darstellen. Die vordere Schnittstelle 4 dient in der Konfiguration als Vorlaufachse zur Aufnahme der Längslenker einer starren Hinterachs-Triebachse.

Die Kombination mit Einzelradaufhängung ermöglicht, die auftretenden Kräfte optimal in die mittlere Baugruppe 12 einzuleiten.
Das Hinterachsmodul kann für eine oder mehrere Vor- und / oder Hinter- und / oder Nachlaufachsen verwendet werden.
Wird das Modul als Hinterachsmodul eingesetzt, so wird anstelle des Unterfahrschutzes der Längslenker der Antriebsachse angebunden. Dadurch ist gewährleistet dass die Längskräfte optimal in die Struktur des Rahmens eingeleitet werden.

### Bezugszeichenliste

- 1:: Vorderachsmodul
- 2:: Obergurt
- 3:: Untergurt
- 4:: vordere Schnittstelle
- 5,6:: Verbinder
- 8:: Unterfahrschutz
- 9:: Abschleppöse
- 10:: vordere Baugruppe
- 11:: Verbindungsstelle
- 12:: mittlere Baugruppe
- 13:: Verbindungsstelle
- 14:: hintere Baugruppe
- 15:: unterer Querlenker
- 16:: Längsträger
- 17:: oberer Querlenker
- 18:: Achsschenkelträger
- 19:: Feder
- 20:: vorderer Endabschnitt
- 21:: Anschlag
- 22:: Querträgerelement
- 23:: Anbindung
- 24:: hinterer Endabschnitt
- 25:: Fahrerhausanbindeelemente
- 36:: trichterförmige Erweiterung
- 40:: Halbschale
- 41:: Biegekante
- 44:: Hohlprofil
- 50:: Bauraum für Kühlsystem
- 68:: Längsträger
- 72:: hinterer Endabschnitt
- 74:: vorderer Endabschnitt
- 80:: Blechquerträger
- A:: Fahrzeuglängsachse

## Patentansprüche

1. Fahrgestell für Nutzfahrzeuge, insbesondere für Sattelzugmaschinen, das umfasst: eine einem Vorderachsbereich des Nutzfahrzeugs zugeordnete vordere Baugruppe (10), eine einem Hinterachsbereich des Nutzfahrzeugs zugeordnete hintere Baugruppe (14), und eine mittlere Baugruppe (12), welche die vordere Baugruppe (10) und die hintere Baugruppe (14) miteinander verbindet,
die hintere und/oder die vordere Baugruppe (10, 14) mindestens ein Hinterachs- bzw. Vorderachsmodul für Einzelradaufhängung aufweisen, wobei die vordere und/oder die hintere Baugruppe (10,14) aus mindestens einem Obergurt (2) und mindestens einem Untergurt (3) besteht, die schubsteif mit Verbindern (5,6) verbunden sind, **dadurch gekennzeichnet, dass** die Anbringung der Einzelradaufhängung mit oberem und unterem Querlenker (15,17) an den Verbindern (5,6) erfolgt.

2. Fahrgestell nach Anspruch 1, **dadurch gekennzeichnet, dass** entweder die vordere oder die hintere Baugruppe (10 , 14) lösbar oder unlösbar mit der mittleren Baugruppe (12) verbunden ist, insbesondere mit dieser verschweißt ist.

3. Fahrgestell nach zumindest einem der vorhergehenden Ansprüche, **dadurch gekennzeichnet, dass** die Verbinder (5,6) beide Untergurte (3) und die Obergurte (2) auf jeder Seite des Fahrzeugs verbinden.

4. Fahrgestell nach zumindest einem der vorhergehenden Ansprüche, **dadurch gekennzeichnet, dass** Obergurt (2) und Untergurt (3) aus einem Bauteil bestehen.

5. Fahrgestell nach zumindest einem der vorhergehenden Ansprüche, **dadurch gekennzeichnet, dass** Obergurt (2) und/oder Untergurt (3) zur Fahrzeuglängsachse (A) einen Winkel aufweisen.

6. Fahrgestell nach zumindest einem der vorhergehenden Ansprüche, **dadurch gekennzeichnet, dass** vordere und/oder die hintere Baugruppe (10,14) an die Bauhöhe der mittleren Baugruppe (12) angepasst sind.

7. Fahrgestell nach zumindest einem der vorhergehenden Ansprüche, **dadurch gekennzeichnet, dass** die vordere Baugruppe (10) für die Aufnahme mindestens einer Vorderachse dient.

8. Fahrgestell nach zumindest einem der vorhergehenden Ansprüche, **dadurch gekennzeichnet, dass** die hintere Baugruppe (14) für die Aufnahme mindestens einer Hinterachse und/oder Vor- und/oder Nachlaufachse dient.

9. Fahrgestell nach zumindest einem der vorhergehenden Ansprüche, **dadurch gekennzeichnet, dass** ein Längslenker für die Antriebsachse am Untergurt (3) angebracht ist.

10. Fahrgestell nach zumindest einem der vorhergehenden Ansprüche, **dadurch gekennzeichnet, dass** ein Unterfahrschutz (8) am Untergurt (3) angebracht ist.

11. Fahrgestell nach zumindest einem der vorhergehenden Ansprüche, **dadurch gekennzeichnet, dass** eine Feder (19) unterhalb des Schubmittelpunktes der Tragstruktur , an der Unterseite des Obergurts 2 angebracht ist und über einen Anschlag (21) abgestützt ist.

12. Fahrgestell nach Anspruch 11, **dadurch gekennzeichnet, dass** die Kraftwirkung der Feder (19) durch den Schubmittelpunkt der Tragstruktur erfolgt.

## Claims

1. Chassis for utility vehicles, in particular for semi-trailer vehicles, which comprises: a front subassembly (10) assigned to a front axle region of the utility vehicle, a rear subassembly (14) assigned to a rear axle region of the utility vehicle, and a central subassembly (12) which connects together the front subassembly (10) and the rear subassembly (14), the rear subassembly and/or the front subassembly (10, 14) have at least one rear axle module and/or front axle module for the independent wheel suspension, wherein the front subassembly and/or the rear subassembly (10, 14) consists of at least one top chord (2) and at least one bottom chord (3) which are connected to connectors (5, 6) in a shear-resistant manner, **characterized in that** the attachment of the independent wheel suspension to the upper and lower transverse control arms (15, 17) takes place on the connectors (5, 6).

2. Chassis according to Claim 1, **characterized in that** either the front subassembly or the rear subassembly (10, 14) is releasably or unreleasably connected to the central subassembly (12), in particular welded thereto.

3. Chassis according to at least one of the preceding claims, **characterized in that** the connectors (5, 6) connect both of the bottom chords (3) and the top chords (2) on each side of the vehicle.

4. Chassis according to at least one of the preceding claims, **characterized in that** the top chord (2) and the bottom chord (3) consist of one component.

5. Chassis according to at least one of the preceding claims, **characterized in that** the top chord (2) and/or the bottom chord (3) form an angle relative to the vehicle longitudinal axis (A).

6. Chassis according to at least one of the preceding claims, **characterized in that** the front subassembly and/or the rear subassembly (10, 14) are adapted to the overall height of the central subassembly (12).

7. Chassis according to at least one of the preceding claims, **characterized in that** the front subassembly (10) serves for receiving at least one front axle.

8. Chassis according to at least one of the preceding claims, **characterized in that** the rear subassembly (14) serves for receiving at least one rear axle and/or leading axle and/or trailing axle.

9. Chassis according to at least one of the preceding claims, **characterized in that** a longitudinal control arm for the drive axle is attached to the bottom chord (3).

10. Chassis according to at least one of the preceding claims, **characterized in that** an underride protection system (8) is attached to the bottom chord (3).

11. Chassis according to at least one of the preceding claims, **characterized in that** a spring (19) is attached to the underside of the top chord (2) below the shear centre of the supporting structure and is supported via a stop (21).

12. Chassis according to Claim 11, **characterized in that** the force of the spring (19) acts through the shear centre of the supporting structure.

## Revendications

1. Châssis pour véhicules utilitaires, en particulier pour tracteurs de semi-remorque, comprenant : un module avant (10) associé à une région d'essieu avant du véhicule utilitaire, un module arrière (14) associé à une région d'essieu arrière du véhicule utilitaire, et un module central (12) qui relie l'un à l'autre le module avant (10) et le module arrière (14),
le module arrière et/ou le module avant (10, 14) présentant au moins un module d'essieu arrière, respectivement un module d'essieu avant pour la suspension de roue individuelle, le module avant et/ou le module arrière (10, 14) se composant d' au moins une membrure supérieure (2) et d'au moins une membrure inférieure (3) qui sont reliées de manière rigide en poussée à des éléments de liaison (5, 6), **caractérisé en ce que** le montage de la suspension de roue individuelle s'effectue avec un bras oscillant transversal supérieur et un bras oscillant transversal inférieur (15, 17) au niveau des éléments de liaison (5, 6).

2. Châssis selon la revendication 1, **caractérisé en ce que** soit le module avant soit le module arrière (10, 14) est relié de manière détachable ou non détachable au module central (12), en particulier par soudage.

3. Châssis selon au moins l'une quelconque des revendications précédentes, **caractérisé en ce que** les éléments de liaison (5, 6) relient les deux membrures inférieures (3) et la membrure supérieure (2) de chaque côté du véhicule.

4. Châssis selon au moins l'une quelconque des revendications précédentes, **caractérisé en ce que** la membrure supérieure (2) et la membrure inférieure (3) se composent d'un composant.

5. Châssis selon au moins l'une quelconque des revendications précédentes, **caractérisé en ce que** la membrure supérieure (2) et/ou la membrure inférieure (3) forment un angle par rapport à l'axe longitudinal (A) du véhicule.

6. Châssis selon au moins l'une quelconque des revendications précédentes, **caractérisé en ce que** le module avant et/ou le module arrière (10, 14) sont adaptés à la hauteur de construction du module central (12).

7. Châssis selon au moins l'une quelconque des revendications précédentes, **caractérisé en ce que** le module avant (10) sert à recevoir au moins un essieu avant.

8. Châssis selon au moins l'une quelconque des revendications précédentes, **caractérisé en ce que** le module arrière (14) sert à recevoir au moins un essieu arrière et/ou un essieu poussé et/ou traîné.

9. Châssis selon au moins l'une quelconque des revendications précédentes, **caractérisé en ce qu'**un bras oscillant longitudinal pour l'essieu moteur est monté sur la membrure inférieure (3).

10. Châssis selon au moins l'une quelconque des revendications précédentes, **caractérisé en ce qu'**un dispositif anti-encastrement (8) est monté sur la membrure inférieure (3).

11. Châssis selon au moins l'une quelconque des revendications précédentes, **caractérisé en ce qu'**un ressort (19) est monté en dessous du centre de poussée de la structure porteuse au niveau du côté inférieur de la membrure supérieure (2) et est supporté par le biais d'une butée (21).

12. Châssis selon la revendication 11, **caractérisé en ce que** l'application de force du ressort (19) s'effectue par le centre de poussée de la structure porteuse.
